# EUROPEAN PATENT SPECIFICATION

(11) **EP 4 502 879 B1**
(45) Date of publication and mention of the grant of the patent: **04.02.2026**
(21) Application number: 23788265.9
(22) Date of filing: 06.04.2023
(51) Int. Cl.: G06N 20/00, G06N 3/098

(54) **SYSTEM**
SYSTEM
SYSTÈME

(30) Priority: 14.04.2022 JP 2022066766
(43) Date of publication of application: 05.02.2025
(73) Proprietor: Softbank Corp., Tokyo 105-7529 (JP)
(72) Inventor: SUDA Kazuto, Tokyo 105-7529 (JP); ISHIWAKA Yuko, Tokyo 105-7529 (JP); OWADA Minoru, Tokyo 105-7529 (JP); YOSHIDA Tomohiro, Tokyo 105-7529 (JP)
(74) Representative: Michalski Hüttermann & Partner Patentanwälte mbB
(86) International application number: PCT/JP2023/014300
(87) International publication number: WO 2023/199846

(56) References cited:
- CN-A- 105 610 944
- CN-A- 111 709 542
- CN-A- 113 465 920
- JP-A- 2021 140 825
- ALEXANDER SASHA VEZHNEVETS; SIMON OSINDERO; TOM SCHAUL; NICOLAS HEESS; MAX JADERBERG; DAVID SILVER; KORAY KAVUKCUOGLU: "FeUdal Networks for Hierarchical Reinforcement Learning", ARXIV.ORG, 3 March 2017 (2017-03-03), XP080754067

## Description

### BACKGROUND

### 1. TECHNICAL FIELD

The present invention relates to a system.

### 2. RELATED ART

Japanese Patent Application Publication No. 2004-2272081 discloses multi-agent reinforcement learning. CN 111 709 542 A describes a fog computing environment-based vehicle prediction and diagnosis method, which belongs to the technical field of Internet of Things and artificial intelligence, and comprises the following steps that a vehicle computing unit acquires data of various sensors in real time, filters and summarizes the data, a vehicle applies for fog computing node resources, and sends real-time data of the vehicle to fog computing nodes. And the fog computing node collects vehicle real-time state data in a network coverage range, vehicle health condition prediction is formed in combination with the vehicle prediction and diagnosis model, and an analysis result is issued to a corresponding vehicle. And the fog computing node periodically sends the vehicle data to the cloud computing center, and the cloud computing center performs storage and big data analysis on the historical data of the vehicle and issues the vehicle prediction and diagnosis model to the fog computing node to complete updating of the prediction and diagnosis model.

### GENERAL DISCLOSURE

The invention is defined in claim 1. Embodiments of the invention are described in the dependent claims. A first embodiment of the present invention provides a system. The system includes a first layer agent of a first layer, and a plurality of second layer agents of a second layer which is lower than the first layer, the first layer agent and the plurality of second layer agents being arranged in a network. Each of the plurality of second layer agents use collected information to execute learning in cooperation with another second layer agent, and transmit, to the first layer agent, information generated by using a learning result. The first layer agent executes learning by using the information received from the plurality of second layer agents. The system further includes a plurality of third layer agents of a third layer which is lower than the second layer. Each of the plurality of third layer agents use collected information to execute learning in cooperation with another third layer agent, and transmit, to at least any of the plurality of second layer agents, information generated by using a learning result. Each of the plurality of third layer agents include: a third information collection unit which collects information; a third learning execution unit which uses the information collected by the third information collection unit, to execute learning in cooperation with a plurality of other third layer agents; and a third information transmission unit which transmits, to at least any of the plurality of second layer agents, information generated by using a learning result obtained by the third learning execution unit. Each of the plurality of second layer agents include: a second information collection unit which collects information from the plurality of third layer agents; a second learning execution unit which uses the information collected by the second information collection unit, to execute learning in cooperation with a plurality of other second layer agents; and a second information transmission unit which transmits, to the first layer agent, information generated by using a learning result obtained by the second learning execution unit. The first layer agent includes: a first information collection unit which collects information from the plurality of second layer agents; and a first learning execution unit which uses information collected by the first information collection unit, to execute learning. The first layer agent is arranged in a first NW layer of a layer type network; the plurality of second layer agents is arranged in a second NW layer which is lower than the first NW layer of the layer type network; and the plurality of third layer agents is arranged in a third NW layer which is lower than the second NW layer of the layer type network. The layer type network is a cloud network; the first NW layer is configured by a cloud computing; the second NW layer is configured by a plurality of fog computings; and the third NW layer is configured by a plurality of edge computings. The layer type network may be a cloud network; the first NW layer may be configured by a cloud computing; the second NW layer is configured by a plurality of fog computings; the third NW layer is configured by a plurality of edge computing; the third information collection unit collects information from a plurality of IoT (Internet of Thing) devices by a mobile communication; the third information transmission unit uses a learning result obtained by the third learning execution unit, to transmit, to at least any of the plurality of second layer agents, information selected from the information collected by the third information collection unit, or information generated by using the learning result; the second information collection unit collects the information transmitted by the third information transmission unit; and the second information transmission unit uses a learning result obtained by the second learning execution unit, to transmit, to the first layer agent, information selected from the information collected by the second information collection unit, or information generated by using the learning result.

In the system, each of the plurality of third layer agents includes a third processing execution unit which uses the learning result obtained by the third learning execution unit, to execute processing on the information collected by the third information collection unit. The third processing execution unit uses the plurality of pieces of information collected by the third information collection unit, to generate information that is to be transmitted to at least any of the plurality of second layer agents. The third processing execution unit uses the learning result obtained by the third learning execution unit, to generate transmission information including the information selected from the plurality of pieces of information collected by the third information collection unit. The third processing execution unit uses the learning result obtained by the third learning execution unit, to generate summary information obtained by summarizing the plurality of pieces of information collected by the third information collection unit. The third information transmission unit transmits, to at least any of the plurality of second layer agents, the information generated by the third processing execution unit. In the system, each of the plurality of second layer agents include a second processing execution unit which uses the learning result obtained by the second learning execution unit, to execute processing on the information collected by the second information collection unit. The second processing execution unit uses the plurality of pieces of information collected by the second information collection unit, to generate information that is to be transmitted to the first layer agent. The second processing execution unit uses the learning result obtained by the second learning execution unit, to generate transmission information including the information selected from the plurality of pieces of information collected by the second information collection unit. The second processing execution unit uses the learning result obtained by the second learning execution unit, to generate summary information obtained by summarizing the plurality of pieces of information collected by the second information collection unit. The second information transmission unit transmits, to the first layer agent, the information generated by the second processing execution unit. In the system, the first layer agent includes a first processing execution unit which uses the learning result obtained by the first learning execution unit, to execute processing on the information collected by the first information collection unit. The first processing execution unit uses the learning result obtained by the first learning execution unit, to execute processing with a purpose of stabilizing the entire network to which the system is applied. The first processing execution unit generates instruction information for at least any of the plurality of second layer agents or at least any of the plurality of third layer agents, based on a result obtained by analyzing the information collected by the first information collection unit. The first processing execution unit may generate the instruction information for instructing at least any of the plurality of third layer agents, regarding the information that is to be transmitted to at least any of the plurality of second layer agents, among the information collected from the IoT device. The first processing execution unit may generate the instruction information for instructing at least any of the plurality of second layer agents, regarding a processing content of the information collected from at least any of the plurality of second layer agents. The first processing execution unit may generate training information that is to be transmitted to at least any of the plurality of third layer agents, based on the result obtained by analyzing the information collected by the first information collection unit. The first processing execution unit may generate training information that is to be transmitted to at least any of the plurality of second layer agents, based on the result obtained by analyzing the information collected by the first information collection unit. The first processing execution unit may generate the training information including a reward that is set in accordance with a change in a trend of the information collected by the first information collection unit.

When one of the purposes of the system is to analyze the information that is transmitted by the plurality of IoT devices, the plurality of third layer agents may execute an analysis for which more real time performance is required; the first layer agent may analyze a trend over a long period to a certain degree; and the plurality of second layer agent may execute an analysis corresponding to a period in between. When the purpose of the system is to manage a state of an occurrence of an accident in a certain area, the plurality of third layer agents may collect image data and object sensing data, from the plurality of IoT devices arranged in the area; the plurality of third layer agents which are responsible for geographically adjacent sub-areas, may share information, and execute learning to detect the occurrence of an accident; the third layer agent may use the learning result, to detect the occurrence of an accident; the plurality of second layer agents may be allocated to a group of the sub-areas, to collect the information from the third layer agent which collects the information from the IoT device in the sub-area of the group; the plurality of second layer agents may execute learning to predict the occurrence of an accident, by cooperating with each other; the second layer agent may use the learning result to predict the occurrence of an accident; and the first layer agent may execute learning to perform an overall control of the information, by prediction results obtained by the plurality of second layer agents. The first layer agent may perform the control: to increase the amount of information that is collected, or increase the types of information, for the sub-area where an accident is predicted to occur; and to reduce the amount of information that is collected, or the types of information, for the sub-area other than that.

In the cloud network, when one of the purposes of the system is to smoothly route a message for providing a notification of the information obtained by the IoT device, the third layer agent may perform the message routing. The third layer agent may cooperate with the another third layer agent to execute, for the message from a publisher, learning to control Topic, To (including Copy), and splitting. The third layer agent may use the learning result, to cooperate with the another third layer agent, and control a generation of the Topic, a determination of the To, a duplication of the message, the splitting of the message, or the like such that the message from the publisher reaches an appropriate subscriber. The second layer agent may monitor the routing performed by the third layer agent, for example, by the information that is collected from the third layer agent, to execute learning to be able to execute the processing to resolve a problem that occurs in the routing. In a case where there are messages which have the same To and of which destinations are unknown, the second layer agent may buffer the messages, and release parts of the messages that are being buffered onto the network when an amount of buffering exceeds a threshold value; as a result, when the message returns again, the buffering may be performed until it arrives or for a certain period of time; and when the message starts arriving, the transmission of the messages which have the same To, among the messages that are being buffered, may be started. The first layer agent may execute learning to detect the problem in the network, by the information that is collected from the second layer agent. When the problem in the network is detected, the first layer agent may use the learning result, to notify a network operator of the detection result, or to output an instruction to change a configuration of the network.

For example, when one of the purposes of the system is to implement a control in relation to automatic driving, each of the plurality of third layer agents may collect the information, for each of a plurality of divided areas, from: the IoT device mounted on a vehicle located within the area; the IoT device mounted on a traffic light or the like; and the IoT device installed on a road or the like. The third layer agent may collect at least any of vehicle location information; an image captured by a vehicle camera or a street camera; vehicle sensing information or human sensing information sensed by a road sensor; a distance between vehicles sensed by a vehicle sensor or the like; local weather information; or vehicle navigation information; a vehicle travel speed. The third layer agent is responsible for a certain area, and may collect, from a time when a certain vehicle enters the area, the information from the IoT device mounted in the vehicle; and hands over the collection of the information, when the vehicle leaves the area, to the third layer agent which is responsible for an area into which the vehicle enters. The third layer agent may share the information with the another third layer agent, to execute sensing of a danger such as a case where a distance between vehicles becomes shorter than a threshold value, and a collision between a vehicle and a human being or the like. When the danger is sensed, the third layer agent may transmit danger sensing information to a vehicle that is a target. The second layer agent may instruct the third layer agent, regarding what information to communicate. Based on the information (a day of the week, a time, or the like) collected from the third layer agent in the past, the second layer agent may analyze (learn) the important information (a fact that there are a large number of people, a large number of vehicles, or the like), and make it possible to determine the information that has a high priority for collection. The second layer agent may issue the instruction to the third layer agent such that the information that has a high priority can be collected for each period. By learning in cooperation with another second layer agent, the second layer agent may be able to specify the information that has a high priority, with a high precision. As a result of learning, the second layer agent may provide the instruction such that in the morning on weekdays, the information can be collected, with a vehicle sensing result being given a higher priority; and provide the instruction such that in the afternoon on holidays, the information can be collected, with a higher priority being given to a human sensing result. The first layer agent may execute a broader range of analysis. The first layer agent may execute a prediction several steps ahead (for a set time), from traffic information (a traffic volume, a time, a day of the week, an event, and weather) for the area of responsibility (in a unit of a city, a prefecture, and a nation); and provide the information to the second layer agent.

Note that the summary clause does not necessarily describe all necessary features of the embodiments of the present invention. The invention may also include a sub-combination of the features described above.

### BRIEF DESCRIPTION OF THE DRAWINGS

Fig. 1 schematically shows an example of a network 100 that is a target to which an autonomous distributed system is applied.
Fig. 2 schematically shows an example of a cloud network 300 which is an example of the network 100.
Fig. 3 schematically shows an example of an autonomous distributed system 200.
Fig. 4 schematically shows an example of a functional configuration of a lower agent 230.
Fig. 5 schematically shows an example of a functional configuration of an intermediate agent 220.
Fig. 6 schematically shows an example of a functional configuration of an upper agent 210.
Fig. 7 schematically shows another example of the autonomous distributed system 200.
Fig. 8 schematically shows an example of a hardware configuration of a computer 1200 which implements the upper agent 210, the intermediate agent 220, or a lower agent 230.

### DESCRIPTION OF EXEMPLARY EMBODIMENTS

An autonomous distributed system which is one of multi-agent systems, is known. In the autonomous distributed system, a purpose is that each of a plurality of agents independently and autonomously learns, and acquires a cooperative behavior. A case where the respective agents are in exactly the same state (for a structure or a parameter), is referred to as being homogeneous, and a case where the agents are brought, from the homogeneous state, into states different (heterogeneous) from each other, is referred to as a functional differentiation. As an application example of the autonomous distributed system, there is an example of a tracking problem or the like in which a Target and a plurality of Hunters exist, and the plurality of Hunters learn how to capture the Target, that is, the plurality of Hunter agents each learn their own roles to capture the Target in cooperation. **In** the autonomous distributed system, in a group of agents with the same performance (homo), functions are differentiated by learning, and each takes the role (hetero). For example, in the tracking problem, there is a division between an agent that performs tracking in a straight manner, and an agent that goes around. By using such a technology, for example, it is possible to autonomously perform the learning in an environmentally adaptive manner by the same algorithm, or to perform the learning autonomously in a distributed manner by the multi-agents. In the present embodiment, the autonomous distributed system is applied to a network.

Hereinafter, the present invention will be described through embodiments of the invention, but the following embodiments do not limit the invention according to the claims. **In** addition, not all of the combinations of features described in the embodiments are essential to the solution of the invention.

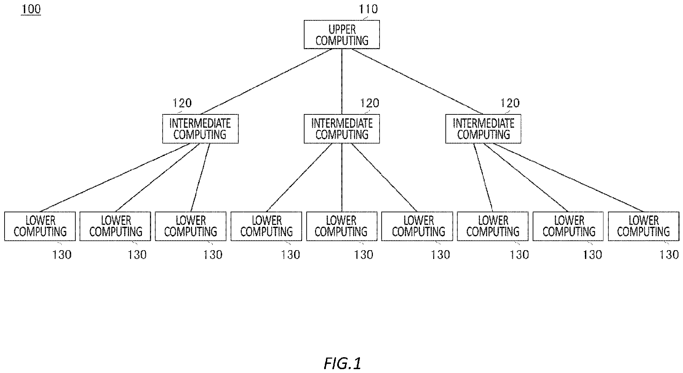

Fig. 1 schematically shows an example of a communication network 100 that is a target to which an autonomous distributed system is applied. The communication network 100 is a network of a layer type. The communication network 100 is configured by an upper computing 110, a plurality of intermediate computings 120, and a plurality of lower computings 130.

A first NW (NetWork) layer is configured by the upper computing 110, a second NW layer which is lower than the first NW layer is configured by the plurality of intermediate computings 120, and a third NW layer which is lower than the second NW layer is configured by the plurality of lower computings 130.

The communication network 100 that is a target to which the autonomous distributed system is applied, may be any communication network as long as it has a layer structure. For example, the communication network 100 is a cloud network.

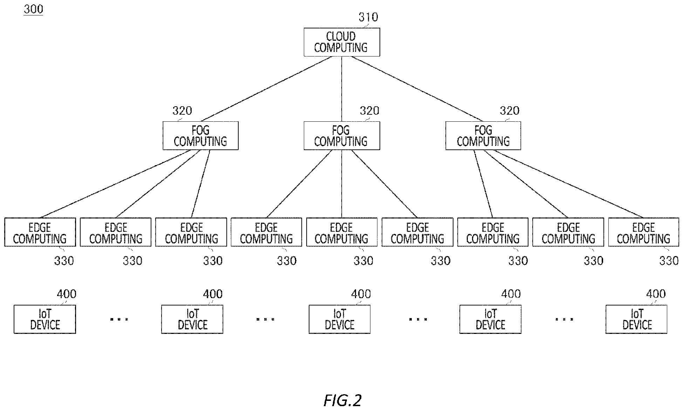

Fig. 2 schematically shows an example of a cloud network 300 which is an example of the communication network 100. The cloud network 300 is configured by a cloud computing 310, a plurality of fog computings 320, and a plurality of edge computings 330.

The cloud computing 310 may be an example of the upper computing 110. The fog computing 320 may be an example of the intermediate computing 120. The edge computing 330 may be an example of the lower computing 130.

In the cloud network 300, a first NW layer is configured by the cloud computing 310, a second NW layer is configured by the plurality of fog computings 320, and a third NW layer is configured by the plurality of edge computings 330.

Each of the plurality of edge computings 330 communicates with one or more IoT devices 400 via a mobile communication system. Each of the plurality of IoT devices 400 may transmit information to at least any of the plurality of edge computings 330, via a wireless base station, a Wi-Fi (registered trademark) access point, and the like.

The IoT device 400 may be any device as long as it is capable of acquiring and transmitting any information. The IoT device 400 includes, for example, various types of sensors. An example of the information that is transmitted by the IoT device 400 includes image data (a still image and a moving image), sound data, infrared data, location data, object sensing data, distance data, weather data, temperature data, humidity data, or the like; however, these are merely examples and any information may be used.

The mobile communication system is, for example, a 5G (5th Generation) communication system. The mobile communication system may be an LTE (Long Term Evolution) communication system. The mobile communication system may be a 3G (3rd Generation) communication system. The mobile communication system may be a mobile communication system of a 6G (6th Generation) communication system onwards.

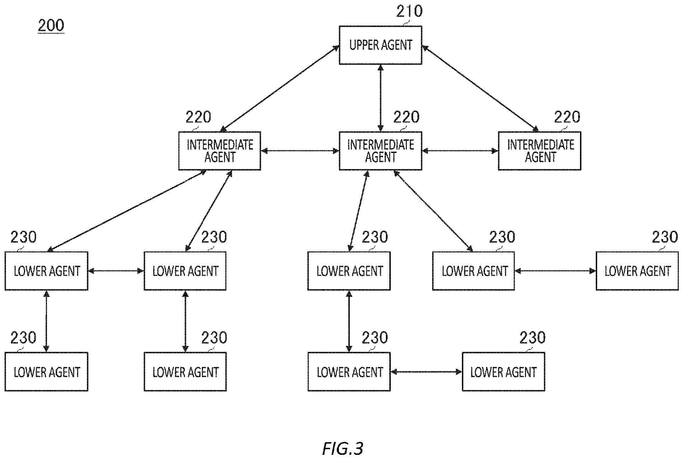

Fig. 3 schematically shows an example of an autonomous distributed system 200. The autonomous distributed system 200 is configured by a plurality of agents having a layer structure. In the example shown in Fig. 3, the autonomous distributed system 200 includes an upper agent 210, a plurality of intermediate agents 220, and a plurality of lower agents 230.

The autonomous distributed system 200 is applied to the communication network 100. For example, the upper agent 210 is arranged on the upper computing 110, each of the plurality of intermediate agents 220 is arranged in each of the plurality of intermediate computings 120, and each of the plurality of lower agents 230 is arranged in each of the plurality of lower computings 130. The plurality of intermediate agents 220 may be arranged for one intermediate computing 120. The plurality of lower agents 230 may be arranged in one lower computing 130.

Fig. 2 illustrates a case where the autonomous distributed system 200 is configured by three layers, however, the present invention is not limited to this. The autonomous distributed system 200 may have two layers, or may have four or more layers. When the autonomous distributed system 200 has two layers, the autonomous distributed system 200 may include the upper agent 210 and the plurality of lower agents 230. **In** this example, the upper agent 210 may be an example of a first layer agent of a first layer, and the lower agent 230 may be an example of a plurality of second layer agents of a second layer. **In** this case, for example, the upper agent 210 is arranged in the upper computing 110, and each of the plurality of lower agents 230 is arranged in each of the plurality of lower computings 130. **In** addition, for example, the upper agent 210 is arranged in any of the plurality of intermediate computings 120, and the plurality of lower agents 230 are arranged in each of the plurality of lower computings 130. It should be noted that in this case, the communication network 100 may be configured by the two layers without including the plurality of intermediate computings 120.

The autonomous distributed system 200 is applied, for example, to the cloud network 300. For example, the upper agent 210 is arranged in the cloud computing 310, each of the plurality of intermediate agents 220 is arranged in each of the plurality of fog computings 320, and each of the plurality of lower agents 230 is arranged in each of the plurality of edge computings 330. The plurality of intermediate agents 220 may be arranged for one fog computing 320. The plurality of lower agents 230 may be arranged in one edge computing 330.

When the autonomous distributed system 200 has two layers, for example, the upper agent 210 is arranged in the cloud computing 310, and each of the plurality of lower agents 230 is arranged in each of the plurality of edge computings 330. **In** addition, for example, the upper agent 210 is arranged in any of the plurality of fog computings 320, and the plurality of lower agents 230 are arranged in each of the plurality of edge computings 330. It should be noted that in this case, the cloud network 300 may be configured by the two layers without including the plurality of fog computings 320.

The lower agent 230 collects the information. The lower agent 230 collects, for example, the information transmitted by the IoT device 400. The lower agent 230 may collect the information from the IoT device 400 by a mobile communication. The lower agent 230 may collect the information transmitted by any device other than the IoT device 400. The lower agent 230 may collect the information from any device other than the IoT device 400 via the mobile communication.

The lower agent 230 uses collected information to execute learning in cooperation with another lower agent 230. The lower agent 230 may execute the learning according to a reward registered in advance. The lower agent 230 may execute the learning according to knowledge registered in advance. The lower agent 230 may use a learning result to execute various types of processing. For example, the lower agent 230 uses the learning result to select, from among a plurality of pieces of collected information, the information that is to be transmitted to the intermediate agent 220; and transmits the selected information to the intermediate agent 220. For example, the lower agent 230 uses the learning result to generate summary information obtained by summarizing the plurality of pieces of collected information; and transmits the summary information to the intermediate agent 220.

For example, when the purpose is to transmit only useful information to an upper layer, from among a large amount of information that is transmitted by the plurality of IoT devices 400, a degree of usefulness of the information is registered as the reward, the information being collected from the IoT device 400 and being transmitted to the intermediate agent 220 or the upper agent 210, by the lower agent 230. Each of the plurality of lower agents 230 cooperates with another lower agent 230, and autonomously advances the learning to maximize the reward. The plurality of lower agents 230 collect the information from one or more different IoT devices 400; select the information that is to be transmitted to the upper layer, from the collected information, by criteria different from each other, or generate the summary information that is to be transmitted to the upper layer, from the collected information; and thus the system can be constructed such that the only information of which the degree of usefulness is high overall, is transmitted to the upper layer.

The lower agent 230 may execute the processing with a comparatively high real time performance. For example, the lower agent 230 uses the learning result to perform the selection processing, or the generation processing of the summary information, on the information that is collected from one or more IoT devices 400 for each predetermined time, such as every one minute and every three minutes, and transmits the information to the upper layer. This makes it possible to adjust the information that is to be transmitted to the upper layer, in real time. For example, in a case of the plurality of lower agents 230 arranged in the edge computing 330 which handles the information that is mostly an image during the day and infrared data at night, many of the lower agents 230 are responsible for the images during the day, and are responsible for the infrared data at night. In this way, the lower agent 230 is able to be dynamically adapted to the environment, and thus is able to be adapted, for example, even to a case where the IoT device 400 which is an information collection target, is changed, or a case where a type of the information that is collected by the IoT device 400 which is an information collection target, is changed. In this manner, the lower agent 230 may execute the processing in real time, but may transmit statistical information, or transmit summary information, after a time delay. The lower agent 230 may be able to intentionally introduce a delay.

The intermediate agent 220 collects the information. The intermediate agent 220 may collect the information from the lower agent 230. The intermediate agent 220 collects, for example, from the lower agent 230, the information collected from the IoT device 400 by the lower agent 230. For example, the intermediate agent 220 collects, from the lower agent 230, the information selected by the lower agent 230, from among the plurality of pieces of information collected from the IoT device 400 by the lower agent 230. For example, the intermediate agent 220 collects, from the lower agent 230, the summary information obtained by summarizing the plurality of pieces of information collected from the IoT device 400 by the lower agent 230.

The intermediate agent 220 uses the collected information to execute the learning in cooperation with another intermediate agent 220. The intermediate agent 220 may use the learning result to execute various types of processing. For example, the intermediate agent 220 uses the learning result to select, from among the plurality of pieces of collected information, the information that is to be transmitted to the intermediate agent 220; and transmits the selected information to the upper agent 210. For example, the intermediate agent 220 uses the learning result to generate summary information obtained by summarizing the plurality of pieces of collected information; and transmits the summary information to the upper agent 210.

The intermediate agent 220 may execute the processing with a low real time performance in comparison with that of the lower agent 230. For example, the intermediate agent 220 executes the processing using the information that is collected from one or more lower agents 230 for each predetermined period, such as every hour and every day. The intermediate agent 220 executes, for example, the learning using the information of the predetermined period. The intermediate agent 220 may cooperate with another intermediate agent 220 to adjust an amount of information that is to be transmitted from the plurality of lower agents 230 to the upper layer, or to adjust an amount of information that is to be transmitted from the plurality of intermediate agents 220 to the upper agent 210. The intermediate agent 220 may execute the learning and the processing to ensure robustness in the autonomous distributed system 200. The intermediate agent 220 may take the role of a Spinal Cord in the autonomous distributed system 200. When the information is received from the lower agent 230, the intermediate agent 220 may determine whether to transmit, to the upper agent 210, the information or information generated based on the information, or to make a response or transmit an instruction to the lower agent 230.

The upper agent 210 collects the information. The upper agent 210 may collect the information from the intermediate agent 220. For example, the upper agent 210 collects the information from the intermediate agent 220, which is collected from the lower agent 230, from the lower agent 230. For example, the upper agent 210 collects, from the intermediate agent 220, the information selected by the intermediate agent 220, from among the plurality of pieces of information collected from the lower agent 230 by the intermediate agent 220. For example, the upper agent 210 collects, from the intermediate agent 220, the summary information obtained by summarizing the plurality of pieces of information collected from the lower agent 230 by the intermediate agent 220. The upper agent 210 may collect the information from the lower agent 230.

The upper agent 210 executes the processing using the collected information. The upper agent 210 executes, for example, the learning using the collected information. The upper agent 210 uses, for example, the learning result to execute various types of processing.

The upper agent 210 may execute the processing with a low real time performance in comparison with that of the intermediate agent 220. For example, the upper agent 210 executes the processing using the collected information for each predetermined period, such as one week, one month, and one year. The upper agent 210 executes, for example, the learning using the information of the predetermined period.

The upper agent 210 may execute the processing having a purpose of stabilizing the entire autonomous distributed system 200. For example, the upper agent 210 may execute a factor analysis or the like of an overall communication load of the communication network 100 or the cloud network 300, based on the collected information. By a content of the collected information, or a collection state of the information, the upper agent 210 may specify a location where a communication load is high in the network; and for example, adjust an amount of information that is to be transmitted by the IoT device 400, the lower agent 230, and the intermediate agent 220, or adjust a propagation path, to reduce the communication load.

The amount of information that is handled in the so-called cloud network is increasing dramatically. In the future, as the 5G mobile communication systems become more widespread and the number of IoT devices increases, the amount of information is expected to be further increased. As usual means, a countermeasure against such an increase in the amount of information, is to enhance a communication function of the network or a performance of network equipment; however, by this alone, the handling is not possible. In contrast with that, by applying the autonomous distributed system 200 according to the present embodiment, to the network, it is possible to layer the processing. With the autonomous distributed system 200, for example, while the processing with a high real time performance is executed, by the lower agent 230, the useful information is sorted out and is transmitted to the upper layer; while information processing having a slightly wider span and using carefully selected information, is performed, by the intermediate agent 220, the information is further sorted out; information processing having a wider span and using more carefully selected information, is performed, in the upper agent 210, and the stabilization of the entire network is achieved; and thus it is possible to contribute to a construction of an environment in which a large amount of information is handled appropriately.

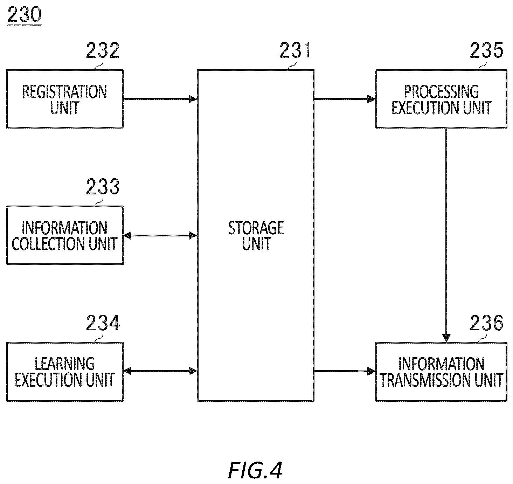

Fig. 4 schematically shows an example of a functional configuration of the lower agent 230. The lower agent 230 includes a storage unit 231, a registration unit 232, an information collection unit 233, a learning execution unit 234, a processing execution unit 235, and an information transmission unit 236.

The registration unit 232 executes various types of registration. The registration unit 232 registers, for example, training information that is used for the learning by the lower agent 230. The registration unit 232 stores the registered training information in the storage unit 231. The training information may include a reward. The training information may include knowledge. The registration unit 232 registers the training information, for example, by receiving an input by an operator or the like of the autonomous distributed system 200. The registration unit 232 registers, for example, the training information received from the upper agent 210. The registration unit 232 registers, for example, the training information received from the intermediate agent 220. The registration unit 232 may be an example of a third registration unit.

The information collection unit 233 collects the information. The information collection unit 233 may collect the information transmitted by any device. The information collection unit 233 collects, for example, the information transmitted by the IoT device 400. The information collection unit 233 may collect the information from the IoT device 400 by the mobile communication. The information collection unit 233 stores the collected information in the storage unit 231. The information collection unit 233 may be an example of a third information collection unit.

The learning execution unit 234 uses the information collected by the information collection unit 233, to execute the learning. The learning execution unit 234 may use the information collected by the information collection unit 233 to execute the learning in cooperation with another lower agent 230.

The learning execution unit 234 stores the learning result in the storage unit 231. The learning result may include a model generated by the learning execution unit 234 through the learning The learning result may include a neural network generated by the learning execution unit 234 through the learning The learning execution unit 234 may be an example of a third learning execution unit.

The learning execution unit 234 may use any learning method. For example, the learning execution unit 234 first executes pre-learning (Pre-training) by a simulation, and updates the model, the neural network, and the like, by the information that is collected by the information collection unit 233. For the pre-training, real data collected by the information collection unit 233 in the past may be used. For the pre-training, synthetic data may be used. In a case of an environment where trial and error is not permitted in learning, a method to perform the rule-based learning rather than reinforcement learning, and to learn only a parameter thereof, is effective. The learning method may be an ANN (Artificial Neural Network), a DNN (Deep Neural Network), heuristics, or the like.

The processing execution unit 235 executes various types of processing. The processing execution unit 235 may use the learning result obtained by the learning execution unit 234, to execute the processing on the information collected by the information collection unit 233. The processing execution unit 235 may use the plurality of pieces of information collected by the information collection unit 233, to generate the information that is to be transmitted to the intermediate agent 220.

For example, the processing execution unit 235 uses the learning result obtained by the learning execution unit 234, to generate transmission information including the information selected from the plurality of pieces of information collected by the information collection unit 233. For example, the processing execution unit 235 uses the learning result obtained by the learning execution unit 234, to generate summary information obtained by summarizing the plurality of pieces of information collected by the information collection unit 233. The processing execution unit 235 may be an example of a third processing execution unit.

The information transmission unit 236 transmits the information. For example, the information transmission unit 236 transmits, to the intermediate agent 220, the information collected by the information collection unit 233. For example, the information transmission unit 236 transmits, to the intermediate agent 220, the information generated by the processing execution unit 235. The information transmission unit 236 may be an example of a third information transmission unit.

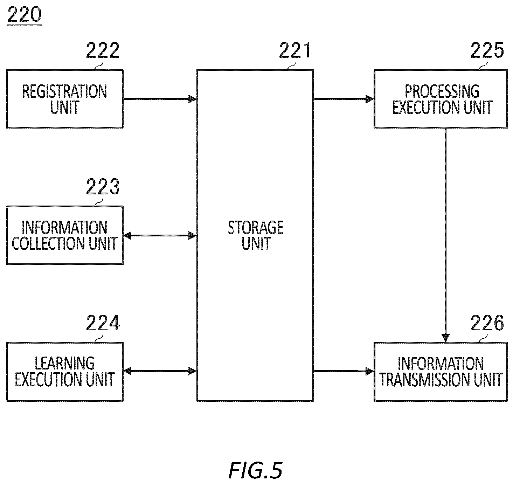

Fig. 5 schematically shows an example of a functional configuration of the intermediate agent 220. The intermediate agent 220 includes a storage unit 221, a registration unit 222, an information collection unit 223, a learning execution unit 224, a processing execution unit 225, and an information transmission unit 226.

The registration unit 222 executes various types of registration. The registration unit 222 registers, for example, training information that is used for the learning by the intermediate agent 220. The registration unit 222 stores the registered training information in the storage unit 221. The training information may include a reward. The training information may include knowledge. The registration unit 222 registers the training information, for example, by receiving an input by an operator or the like of the autonomous distributed system 200. The registration unit 222 registers, for example, the training information received from the upper agent 210. The registration unit 222 may be an example of a second registration unit.

The information collection unit 223 collects the information. The information collection unit 223 may collect the information from the lower agent 230. The information collection unit 223 collects, for example, the information transmitted by the information transmission unit 236 of the lower agent 230. The information collection unit 223 stores the collected information in the storage unit 221. The information collection unit 223 may be an example of a second information collection unit.

The learning execution unit 224 uses the information collected by the information collection unit 223, to execute the learning. The learning execution unit 224 may use the information collected by the information collection unit 223, to execute the learning in cooperation with another intermediate agent 220.

The learning execution unit 224 stores the learning result in the storage unit 221. The learning result may include a model generated by the learning execution unit 224 through the learning The learning result may include a neural network generated by the learning execution unit 224 through the learning The learning execution unit 224 may be an example of a second learning execution unit.

The learning execution unit 224 may use any learning method. For example, the learning execution unit 224 first executes pre-training by a simulation, and updates the model, the neural network, and the like, by the information that is collected by the information collection unit 223. For the pre-training, real data collected by the information collection unit 223 in the past may be used. For the pre-training, synthetic data may be used. In a case of an environment where trial and error is not permitted in learning, a method to perform the rule-based learning rather than reinforcement learning, and to learn only a parameter thereof, is effective. The learning method may be an ANN, a DNN, heuristics, or the like.

The processing execution unit 225 executes various types of processing. The processing execution unit 225 may use the learning result obtained by the learning execution unit 224, to execute the processing on the information collected by the information collection unit 223. The processing execution unit 225 may use the plurality of pieces of information collected by the information collection unit 223, to generate the information that is to be transmitted to the upper agent 210.

For example, the processing execution unit 225 uses the learning result obtained by the learning execution unit 224, to generate transmission information including the information selected from the plurality of pieces of information collected by the information collection unit 223. For example, the processing execution unit 225 uses the learning result obtained by the learning execution unit 224, to generate summary information obtained by summarizing the plurality of pieces of information collected by the information collection unit 223. The processing execution unit 225 may be an example of a second processing execution unit.

The information transmission unit 226 transmits the information. For example, the information transmission unit 226 transmits, to the upper agent 210, the information collected by the information collection unit 223. For example, the information transmission unit 226 transmits, to the upper agent 210, the information generated by the processing execution unit 225. The information transmission unit 226 may be an example of a second information transmission unit.

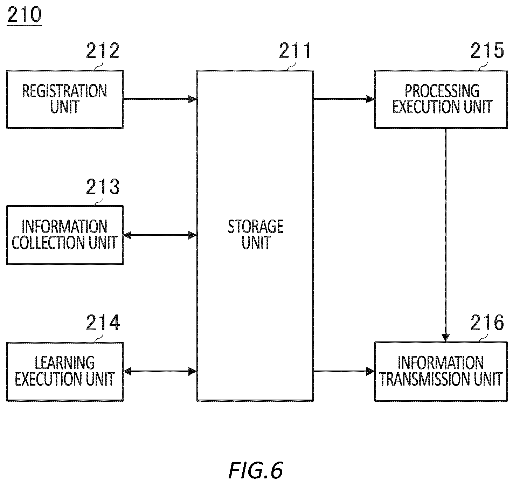

Fig. 6 schematically shows an example of a functional configuration of the upper agent 210. The upper agent 210 includes a storage unit 211, a registration unit 212, an information collection unit 213, a learning execution unit 214, a processing execution unit 215, and an information transmission unit 216.

The registration unit 212 executes various types of registration. The registration unit 212 registers, for example, training information that is used for the learning by the upper agent 210. The registration unit 212 stores the registered training information in the storage unit 211. The training information may include a reward. The training information may include knowledge. The registration unit 212 registers the training information, for example, by receiving an input by an operator or the like of the autonomous distributed system 200. The registration unit 212 may be an example of a first registration unit.

The information collection unit 213 collects the information. The information collection unit 213 may collect the information from the intermediate agent 220. The information collection unit 213 collects, for example, the information transmitted by the information transmission unit 226 of the intermediate agent 220. The information collection unit 213 stores the collected information in the storage unit 211. The information collection unit 213 may be an example of a first information collection unit.

The learning execution unit 214 uses the information collected by the information collection unit 213, to execute the learning. The learning execution unit 214 may be an example of a first learning execution unit. The learning execution unit 214 may use the information collected by the information collection unit 213, to execute the learning in cooperation with the plurality of intermediate agents 220. The learning execution unit 214 may use the information collected by the information collection unit 213, to execute the learning in cooperation with the plurality of lower agents 230. The learning execution unit 214 may use the information collected by the information collection unit 213, to execute the learning in cooperation with the plurality of intermediate agents 220 and the plurality of lower agents 230.

The learning execution unit 214 stores the learning result in the storage unit 211. The learning result may include a model generated by the learning execution unit 214 through the learning The learning result may include a neural network generated by the learning execution unit 214 through the learning The learning execution unit 214 may be an example of a first learning execution unit.

The learning execution unit 214 may use any learning method. For example, the learning execution unit 214 first executes pre-training by a simulation, and updates the model, the neural network, and the like, by the information that is collected by the information collection unit 213. For the pre-training, real data collected by the information collection unit 213 in the past may be used. For the pre-training, synthetic data may be used. In a case of an environment where trial and error is not permitted in learning, a method to perform the rule-based learning rather than reinforcement learning, and to learn only a parameter thereof, is effective. The learning method may be an ANN, a DNN, heuristics, or the like.

The processing execution unit 215 executes various types of processing. The processing execution unit 215 may be an example of a first processing execution unit. The processing execution unit 215 may use the learning result obtained by the learning execution unit 214, to execute the processing on the information collected by the information collection unit 213. The processing execution unit 215 may use the learning result obtained by the learning execution unit 214, to execute processing with a purpose of stabilizing the entire network to which the autonomous distributed system 200 is applied.

The processing execution unit 215 may generate instruction information for the intermediate agent 220 or the lower agent 230, based on a result obtained by analyzing the information collected by the information collection unit 213. The processing execution unit 215 generates, for example, the instruction information for instructing the lower agent 230, regarding
the information that is to be transmitted to the intermediate agent 220, among the information collected from the IoT device 400. The processing execution unit 215 generates, for example, instruction information for instructing the intermediate agent 220, regarding a processing content of the information collected from the intermediate agent 220.

The processing execution unit 215 may generate the training information that is to be transmitted to the lower agent 230, based on the result obtained by analyzing the information collected by the information collection unit 213. The processing execution unit 215 may generate the training information that is to be transmitted to the intermediate agent 220, based on the result obtained by analyzing the information collected by the information collection unit 213. For example, the processing execution unit 215 generates the training information including a reward that is set in accordance with a change in a trend of the information collected by the information collection unit 213.

The information transmission unit 216 transmits the information. For example, the information transmission unit 216 transmits, to the lower agent 230, the instruction information generated by the processing execution unit 215. For example, the information transmission unit 216 transmits, to the intermediate agent 220, the instruction information generated by the processing execution unit 215.

For example, the information transmission unit 216 transmits, to the lower agent 230, the training information generated by the processing execution unit 215. For example, the information transmission unit 216 transmits, to the intermediate agent 220, the training information generated by the processing execution unit 215.

For example, when one of the purposes of the autonomous distributed system 200 is to analyze the information that is transmitted by the plurality of IoT devices 400, the lower agent 230 executes an analysis for which more real time performance is required; the upper agent 210 analyzes a trend over a long period to a certain degree; and the intermediate agent 220 executes an analysis corresponding to a period in between.

As a specific example, when the purpose is to manage a state of an occurrence of an accident in a certain area, the plurality of lower agents 230 collect image data, object sensing data, or the like, from the plurality of IoT devices 400 arranged in the area. For example, the area is divided into a plurality of sub-areas, and each of the plurality of lower agents 230 collects the information from the IoT device 400 arranged in each of the plurality of sub-areas. Then, the plurality of lower agents 230 which are responsible for geographically adjacent sub-areas, share information, and execute the learning to detect the occurrence of an accident. The lower agent 230 may use the learning result, to detect the occurrence of an accident. In addition, the plurality of intermediate agents 220 are allocated to a group of the sub-areas, to collect the information from the lower agent 230 which collects the information from the IoT device 400 in the sub-area of the group. For example, the plurality of intermediate agents 220 execute the learning to predict the occurrence of an accident, by cooperating with each other. The intermediate agent 220 may use the learning result to predict the occurrence of an accident. The upper agent 210 executes the learning to perform an overall control of the information, for example, by prediction results obtained by the plurality of intermediate agents 220. As a specific example, the upper agent 210 performs the control: to increase the amount of information that is collected, or increase the types of information, for the sub-area where an accident is predicted to occur; and to reduce the amount of information that is collected, or the types of information, for the sub-area other than that.

For example, in the cloud network 300, when one of the purposes of the autonomous distributed system 200 is to smoothly route a message for providing a notification of the information obtained by the IoT device 400, the lower agent 230 performs the message routing. The lower agent 230 cooperates with another lower agent 230 to execute, for the message from a publisher, the learning to control Topic, To (including Copy), and splitting. The lower agent 230 uses the learning result, to cooperate with another lower agent 230, and control a generation of the Topic, a determination of the To, a duplication of the message, the splitting of the message, or the like such that the message from the publisher reaches an appropriate subscriber.

The intermediate agent 220 monitors the routing performed by the lower agent 230, for example, by the information that is collected from the lower agent 230, to execute the learning to be able to execute the processing to resolve a problem that occurs in the routing. For example, in a case where there are messages which have the same To and of which destinations are unknown, the intermediate agent 220 buffers the messages; and releases parts of the messages that are being buffered onto the network when an amount of buffering exceeds a threshold value. As a result, when the message returns again, the buffering is performed until it arrives or for a certain period of time. Then, when the message starts arriving, the transmission of the messages which have the same To, among the messages that are being buffered, is started.

The upper agent 210 executes the learning to detect the problem in the network, for example, by the information that is collected from the intermediate agent 220. Then, when the problem in the network is detected, the upper agent 210 uses the learning result, to notify a network operator or the like of the detection result, or to output an instruction to change a configuration of the network.

For example, when one of the purposes of the autonomous distributed system 200 is to implement a control in relation to automatic driving, each of the plurality of lower agents 230 collects the information, for each of a plurality of divided areas, from: the IoT device 400 mounted on a vehicle located within the area; the IoT device 400 mounted on a traffic light or the like; the IoT device 400 installed on a road or the like; and others. As a specific example, the lower agent 230 collects vehicle location information; an image captured by a vehicle camera or a street camera; vehicle sensing information or human sensing information sensed by a road sensor; a distance between vehicles sensed by a vehicle sensor or the like; local weather information; vehicle navigation information; a vehicle travel speed; and others. In this case, the lower agent 230 is responsible for a certain area, and collects, from a time when a certain vehicle enters the area, the information from the IoT device 400 mounted in the vehicle; and hands over the collection of the information, when the vehicle leaves the area, to the lower agent 230 which is responsible for an area into which the vehicle enters.

The lower agent 230 shares the information with another lower agent 230, to execute sensing of a danger such as a case where a distance between vehicles becomes shorter than a threshold value, and a collision between a vehicle and a human being or the like. When the danger is sensed, the lower agent 230 transmits danger sensing information to a vehicle that is a target. In response to receiving the danger sensing information, the vehicle issues a warning to a driver, or stops traveling.

The intermediate agent 220 instructs, for example, the lower agent 230, regarding what information to communicate. For example, based on the information (a day of the week, a time, or the like) collected from the lower agent 230 in the past, the intermediate agent 220 analyzes (learns) the important information (a fact that there are a large number of people, a large number of vehicles, or the like), and makes it possible to determine the information that has a high priority for collection. Then, the intermediate agent 220 issues the instruction to the lower agent 230 such that the information that has a high priority can be collected for each period. By the learning in cooperation with another intermediate agent 220, the intermediate agent 220 is able to specify the information that has a high priority, with a high precision. As a specific example, as a result of the learning, the intermediate agent 220 provides the instruction such that in the morning on weekdays, the information can be collected, with a vehicle sensing result being given a higher priority; and provides the instruction such that in the afternoon on holidays, the information can be collected, with a higher priority being given to a human sensing result.

The upper agent 210 executes, for example, a broader range of analysis. The upper agent 210 executes a prediction several steps ahead (for a set time), from traffic information (a traffic volume, a time, a day of the week, an event, and weather) for the area of responsibility (in a unit of a city, a prefecture, and a nation); and provides the information to the intermediate agent 220.

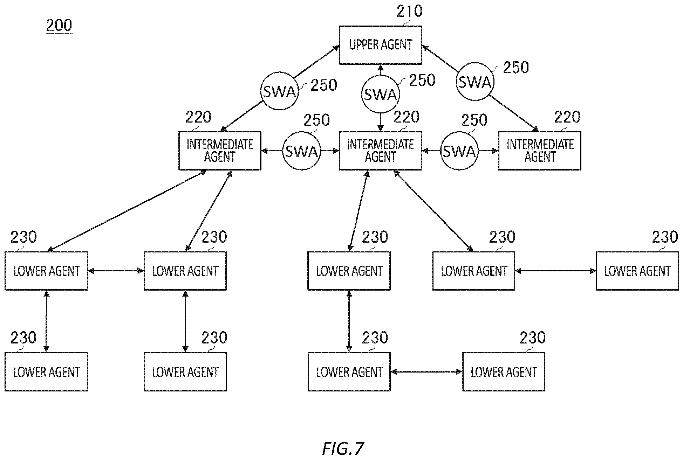

Fig. 7 schematically shows another example of the autonomous distributed system 200. The autonomous distributed system 200 may further include a switch agent 250. The switch agent 250 may control the amount of information flowing through the communication network 100. For example, when the message routing is controlled by the upper agent 210, the intermediate agent 220, and the lower agent 230, the switch agent 250 executes the control of the communication traffic.

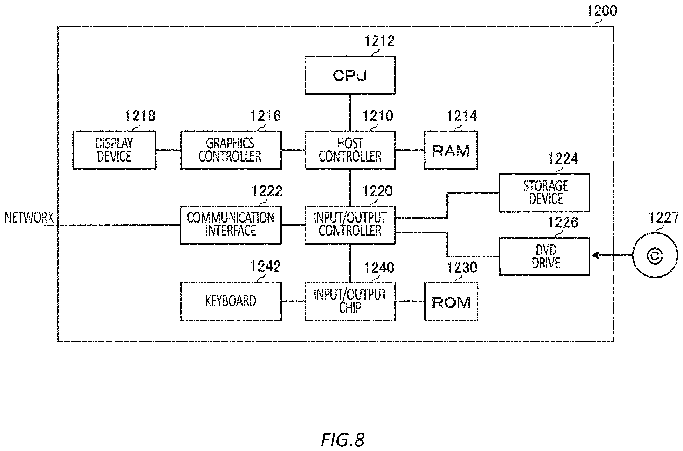

Fig. 8 schematically shows an example of a hardware configuration of a computer 1200 which implements the upper agent 210, the intermediate agent 220, or a lower agent 230. A program installed in the computer 1200 can cause the computer 1200 to function as one or more "units" of an apparatus according to the present embodiment, or cause the computer 1200 to perform operations associated with the apparatus or perform one or more "units" thereof according to the present embodiment, and/or cause the computer 1200 to perform the process according to the present embodiment or perform the steps of the process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes a communication interface 1222, a storage device 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates according to the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive 1226 is configured to read the program or the data from a DVD-ROM 1227 or the like, and to provide the storage device 1224 with the program or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM 1227 or the IC card. The program is read from the computer-readable storage medium, installed into the storage device 1224, the RAM 1214, or the ROM 1230, which are also examples of a computer-readable storage medium, and executed by the CPU 1212. Information processing written in these programs is read by the computer 1200, and provides cooperation between the programs and the various types of hardware resources described above. An apparatus or a method may be constituted by realizing the operation or processing of information in accordance with the usage of the computer 1200.

For example, in a case where a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM 1227, or the IC card, and transmits the read transmission data to a network or writes reception data received from a network to a reception buffer region or the like provided on the recording medium.

In addition, the CPU 1212 may be configured to cause all or a necessary portion of a file or a database, which has been stored in an external recording medium such as the storage device 1224, the DVD drive 1226 (the DVD-ROM 1227), the IC card and the like, to be read into the RAM 1214, thereby executing various types of processing on the data on the RAM 1214. Next, the CPU 1212 may write the processed data back in the external recording medium.

A various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute satisfying a predetermined condition.

The above described program or software modules may be stored in the computer-readable storage medium on or near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are performed or "units" of apparatuses responsible for performing operations. A specific step and "unit" may be implemented by dedicated circuitry, programmable circuitry supplied along with a computer-readable instruction stored on a computer-readable storage medium, and/or a processor supplied along with the computer-readable instruction stored on the computer-readable storage medium. The dedicated circuitry may include a digital and/or analog hardware circuit, or may include an integrated circuit (IC) and/or a discrete circuit. The programmable circuitry may include, for example, a reconfigurable hardware circuit including logical AND, logical OR, logical XOR, logical NAND, logical NOR, and other logical operations, and a flip-flop, a register, and a memory element, such as a field-programmable gate array (FPGA) and a programmable logic array (PLA).

The computer-readable storage medium may include any tangible device capable of storing an instruction performed by an appropriate device, so that the computer-readable storage medium having the instruction stored thereon constitutes a product including an instruction that may be performed in order to provide means for performing an operation specified by a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disc (DVD), a Blu-ray (registered trademark) disc, a memory stick, an integrated circuit card, or the like.

The computer-readable instructions may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuitry of another programmable data processing device locally or via a local area network (LAN), a wide area network (WAN) such as the Internet or the like in order that the general purpose computer, the special purpose computer, or the processor or the programmable circuitry of the other programmable data processing device performs the computer-readable instruction to provide means for performing operations specified by the flowchart or the block diagram. Examples of the processor include a computer processor, a processing unit, a microprocessor, a digital signal processor, a controller, a microcontroller, and the like.

The operations, procedures, steps, and stages of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

100: network; 110: upper computing; 120: intermediate computing; 130: lower computing; 200: autonomous distributed system; 210: upper agent; 211: storage unit; 212: registration unit; 213: information collection unit; 214: learning execution unit; 215: processing execution unit; 216: information transmission unit; 220: intermediate agent; 221: storage unit; 222: registration unit; 223: information collection unit; 224: learning execution unit; 225: processing execution unit; 226: information transmission unit; 230: lower agent; 231: storage unit; 232: registration unit; 233: information collection unit; 234: learning execution unit; 235: processing execution unit; 236: information transmission unit; 250: switch agent; 300: cloud network; 310: cloud computing; 320: fog computing; 330: edge computing; 400: IoT device; 1200: computer; 1210: host controller; 1212: CPU; 1214: RAM; 1216: graphics controller; 1218: display device; 1220: input/output controller; 1222: communication interface; 1224: storage device; 1226: DVD drive; 1227: DVD-ROM; 1230: ROM; 1240: input/output chip.

## Claims

1. A system comprising:
a first layer agent of a first layer, a plurality of second layer agents of a second layer which is lower than the first layer, and a plurality of third layer agents of a third layer which is lower than the second layer, the first layer agent, the plurality of second layer agents, and the plurality of third layer agents being arranged in a network (100), wherein
the first layer agent is arranged in a first network (100) layer of a layer type network (100), the plurality of second layer agents are arranged in a second network (100) layer which is lower than the first network (100) layer of the layer type network (100), and the plurality of third layer agents are arranged in a third network (100) layer which is lower than the second network (100) layer of the layer type network (100),
the layer type network (100) is a cloud network (300), the first network (100) layer is configured by a cloud computing (310), the second network (100) layer is configured by a plurality of fog computings (320), and the third network (100) layer is configured by a plurality of edge computings (330),
each of the plurality of third layer agents
collects information from a plurality of IoT devices (400) by a mobile communication, uses the collected information to execute learning in cooperation with another third layer agent, uses a learning result to generate summary information obtained by summarizing a plurality of pieces of collected information, and transmit, to at least any of the plurality of second layer agents, the generated summary information,
each of the plurality of second layer agents uses the information collected from the plurality of third layer agents, to execute learning in cooperation with another second layer agent, uses a learning result to generate summary information obtained by summarizing a plurality of pieces of collected information, and transmit, to the first layer agent, the generated summary information,
the first layer agent executes learning by using the information received from the plurality of second layer agents,
the second layer agent executes processing with a low real time performance in comparison with that of the third layer agent, and
the first layer agent executes processing with a low real time performance in comparison with that of the second layer agent, wherein
each of the plurality of third layer agents includes
a third information collection unit (233) which collects information,
a third learning execution unit (234) which uses the information collected by the third information collection unit (233), to execute learning in cooperation with a plurality of other third layer agents, and
a third information transmission unit (236) which transmits, to at least any of the plurality of second layer agents, the summary information generated by using a learning result obtained by the third learning execution unit (234), and
each of the plurality of second layer agents includes
a second information collection unit (233) which collects information from the plurality of third layer agents,
a second learning execution unit (234) which uses the information collected by the second information collection unit (233), to execute learning in cooperation with a plurality of other second layer agents, and
a second information transmission unit (236) which transmits, to the first layer agent, the summary information generated by using a learning result obtained by the second learning execution unit (234), and
the first layer agent includes
a first information collection unit (233) which collects information from the plurality of second layer agents, and
a first learning execution unit (234) which uses information collected by the first information collection unit (233), to execute learning

2. The system according to claim 1, wherein
by a content of information collected from the plurality of second layer agents, or a collection state of the information, the first layer agent specifies a location where a communication load is high in the cloud network (300); and adjusts an amount and a propagation path of information that is to be transmitted by the plurality of third layer agents and the plurality of second layer agents, to reduce the communication load.

3. The system according to claim 1 or 2, wherein each of the plurality of third layer agents uses information transmitted by the IoT device (400) which acquires, by a sensor, information including at least any of image data, sound data, infrared data, location data, object sensing data, distance data, weather data, temperature data, or humidity data; and executes learning in cooperation with the plurality of other third layer agents, and transmit, to at least any of the plurality of second layer agents, information generated by using the learning result.

4. The system according to any one of claims 1 to 3, wherein each of the plurality of third layer agents collects information, for each of a plurality of divided areas, from the IoT device (400) mounted on a vehicle located within the area, the IoT device (400) mounted on a traffic light, and the IoT device (400) installed on a road; and shares information with the another third layer agent, to execute sensing of a danger such as a case where a distance between vehicles becomes shorter than a threshold value, and a collision between a vehicle and a human being.

5. The system according to claim 4, wherein based on information collected from the plurality of third layer agents in a past, each of the plurality of second layer agents determines information that has a high priority for collection, by executing learning in cooperation with the another second layer agent; and issues instructions to the plurality of third layer agents such that the information that has a high priority can be collected.

6. The system according to any one of claims 1 to 5, wherein from an IoT device (400) that is arranged in a sub-area of responsibility, each of the plurality of third layer agents collects image data and object sensing data, wherein the sub-area is among a plurality of sub-areas obtained by dividing an area that is a target to manage a state of an occurrence of an accident, and
the plurality of third layer agents which are responsible for the plurality of sub-areas that are geographically adjacent, execute learning to detect the occurrence of an accident while sharing information, and use a learning result to detect the occurrence of an accident.

7. The system according to claim 6, wherein each of the plurality of second layer agents collects information from the plurality of the third layer agent which collects information from IoT devices (400) of a group of the sub-areas that are allocated,
the plurality of second layer agents execute learning to predict the occurrence of an accident, by cooperating with each other, and uses a learning result to predict the occurrence of an accident, and
by prediction results obtained by the plurality of second layer agents, the first layer agent performs a control to increase an amount of information that is collected, or increase types of information that is collected, for the sub-area where an accident is predicted to occur.

8. The system according to any one of claims 1 to 7, wherein each of the plurality of third layer agents cooperates with the another third layer agent to execute, for a message from a publisher, learning to control Topic, To, and splitting; and uses a learning result, to cooperate with the another third layer agent, and control a generation of the Topic, a determination of the To, a duplication of the message, and the splitting of the message such that the message from the publisher reaches an appropriate subscriber.

9. The system according to claim 8, wherein each of the plurality of second layer agents monitors routing performed by the plurality of third layer agents, by information collected from the plurality of third layer agents, to execute learning to execute processing to resolve a problem that occurs in the routing, and
the first layer agent executes learning to detect a problem in the cloud network (300), by information collected from the plurality of second layer agents.

## Patentansprüche

1. System, aufweisend:
einen Agenten einer ersten Schicht, eine Vielzahl von Agenten einer zweiten Schicht, die der ersten Schicht untergeordnet ist, und eine Vielzahl von Agenten einer dritten Schicht, die der zweiten Schicht untergeordnet ist, wobei der Agent der ersten Schicht, die Vielzahl von Agenten der zweiten Schicht und die Vielzahl von Agenten der dritten Schicht in einem Netzwerk (100) angeordnet sind, wobei
der Agent der ersten Schicht in einer ersten Netzwerk(100)schicht eines Netzwerks (100) vom Schichttyp angeordnet ist, die Vielzahl von Agenten der zweiten Schicht in einer zweiten Netzwerk(100)schicht angeordnet sind, die der ersten Netzwerk(100)schicht des Netzwerks (100) des Schichttyps untergeordnet ist, und die Vielzahl von Agenten der dritten Schicht in einer dritten Netzwerk(100)schicht angeordnet sind, die der zweiten Netzwerk(100)schicht des Netzwerks (100) des Schichttyps untergeordnet ist,
das Netzwerk (100) des Schichttyps ein Cloud-Netzwerk (300) ist, die erste Netzwerk(100)schicht durch ein Cloud-Computing (310) konfiguriert ist, die zweite Netzwerk(100)schicht durch eine Vielzahl von Fog-Computings (320) konfiguriert ist und die dritte Netzwerk(100)schicht durch eine Vielzahl von Edge-Computings (330) konfiguriert ist,
jeder der Vielzahl von Agenten der dritten Schicht Information von einer Vielzahl von loT-Vorrichtungen (400) durch Mobilkommunikation sammelt, die gesammelte Information verwendet, um in Zusammenarbeit mit einem anderen Agenten der dritten Schicht einen Lernvorgang auszuführen, ein Lernergebnis verwendet, um zusammengefasste Information zu generieren, die durch Zusammenfassen einer Vielzahl von gesammelten Informationselementen erhalten wird, und die generierte zusammengefasste Information an mindestens einen der Vielzahl von Agenten der zweiten Schicht zu überträgt,
jeder der Vielzahl von Agenten der zweiten Schicht die von der Vielzahl von Agenten der dritten Schicht gesammelte Information verwendet, um in Zusammenarbeit mit einem anderen Agenten der zweiten Schicht ein Lernverfahren auszuführen, ein Lernergebnis verwendet, um zusammengefasste Information zu generieren, die durch Zusammenfassen einer Vielzahl von gesammelten Informationselementen erhalten wird, und die generierte zusammengefasste Information an den Agenten der ersten Schicht überträgt,
der Agent der ersten Schicht ein Lernverfahren unter Verwendung der von der Vielzahl von Agenten der zweiten Schicht empfangenen Information ausführt,
der Agent der zweiten Schicht eine Verarbeitung mit einer im Vergleich zu derjenigen des Agenten der dritten Schicht geringen Echtzeitleistung ausführt, und
der Agent der ersten Schicht eine Verarbeitung mit einer im Vergleich zu derjenigen des Agenten der zweiten Schicht geringen Echtzeitleistung ausführt, wobei
jeder der Vielzahl von Agenten der dritten Schicht aufweist:
eine dritte Informationssammeleinheit (233), die Information sammelt;
eine dritte Lernausführungseinheit (234), die die durch die dritte Informationssammeleinheit (233) gesammelte Information verwendet, um in Zusammenarbeit mit der Vielzahl von anderen Agenten der dritten Schicht einen Lernvorgang auszuführen; und
eine dritte Informationsübertragungseinheit (236), die zusammengefasste Information, die unter Verwendung eines durch die dritte Lernausführungseinheit (234) erhaltenen Lernergebnisses erzeugt wurde, an mindestens einen der Vielzahl von Agenten der zweiten Schicht überträgt, und
jeder der Vielzahl von Agenten der zweiten Schicht aufweist:
eine zweite Informationssammeleinheit (233), die Information von der Vielzahl von Agenten der dritten Schicht sammelt;
eine zweite Lernausführungseinheit (234), die die durch die zweite Informationssammeleinheit (233) gesammelte Information verwendet, um in Zusammenarbeit mit einer Vielzahl von anderen Agenten der zweiten Schicht einen Lernvorgang auszuführen; und
eine zweite Informationsübertragungseinheit (236), die zusammengefasste Information, die unter Verwendung eines durch die zweite Lernausführungseinheit (234) erhaltenen Lernergebnisses erzeugt wurde, an den Agenten der ersten Schicht überträgt, und
wobei der Agent der ersten Schicht aufweist:
eine erste Informationssammeleinheit (233), die Information von der Vielzahl von Agenten der zweiten Schicht sammelt; und
eine erste Lernausführungseinheit (234), die durch die erste Informationssammeleinheit (233) gesammelte Information verwendet, um einen Lernvorgang auszuführen.

2. System gemäß Anspruch 1, wobei
der Agent der ersten Schicht anhand eines Inhalts der von der Vielzahl von Agenten der zweiten Schicht gesammelten Information oder eines Sammelzustands der Information einen Ort spezifiziert, an dem eine Kommunikationslast im Cloud-Netzwerk (300) hoch ist, und eine Menge und einen Übertragungspfad von Information, die durch die Vielzahl von Agenten der dritten Schicht und die Vielzahl von Agenten der zweiten Schicht übertragen werden sollen, einstellt, um die Kommunikationslast zu reduzieren.

3. System nach Anspruch 1 oder 2, wobei jeder der Vielzahl von Agenten der dritten Schicht Information verwendet, die durch die loT-Vorrichtung (400) übertragen wird, die durch einen Sensor Information erfasst, die mindestens ein Datenelement unter Bilddaten, Tondaten, Infrarotdaten, Standortdaten, Objekterfassungsdaten, Entfernungsdaten, Wetterdaten, Temperaturdaten oder Feuchtigkeitsdaten enthält; und in Zusammenarbeit mit der Vielzahl von anderen Agenten der dritten Schicht einen Lernvorgang ausführt und an mindestens einen der Vielzahl von Agenten der zweiten Schicht Information überträgt, die unter Verwendung des Lernergebnisses erzeugt wurde.

4. System nach einem der Ansprüche 1 bis 3, wobei jeder der Vielzahl von Agenten der dritten Schicht für jeden einer Vielzahl von geteilten Bereichen Information von der loT-Vorrichtung (400), die an einem Fahrzeug montiert ist, das sich innerhalb des Bereichs befindet, von der loT-Vorrichtung (400), die an einer Ampel montiert ist, und von der loT-Vorrichtung (400), die auf einer Straße installiert ist, sammelt; und Information mit dem anderen Agenten der dritten Schicht teilt, um eine Gefahr, wie beispielsweise einen Fall, in dem der Abstand zwischen Fahrzeugen kleiner als ein Schwellenwert wird, und eine Kollision zwischen einem Fahrzeug und einem Menschen, zu erfassen.

5. System nach Anspruch 4, wobei basierend auf Information, die in der Vergangenheit von der Vielzahl von Agenten der dritten Schicht gesammelt wurde, jeder der Vielzahl von Agenten der zweiten Schicht Information, die hohe Priorität für das Sammeln hat, durch Ausführen eines Lernvorgangs in Zusammenarbeit mit dem anderen Agenten der zweiten Schicht bestimmt und Anweisungen an die Vielzahl von Agenten der dritten Schicht ausgibt, so dass die Information, die hohe Priorität hat, gesammelt werden kann.

6. System nach einem der Ansprüche 1 bis 5, wobei jeder der Vielzahl von Agenten der dritten Schicht von einer loT-Vorrichtung (400), die in einem Teilbereich der Zuständigkeit angeordnet ist, Bilddaten und Objekterfassungsdaten sammelt, wobei der Teilbereich ein Teilbereich einer Vielzahl von Teilbereichen ist, die durch Teilen eines Bereichs erhalten werden, der ein Ziel zum Managen eines Zustands eines Unfallereignisses ist, und
die Vielzahl von Agenten der dritten Schicht, die für eine Vielzahl geografisch benachbarter Teilbereiche verantwortlich sind, einen Lernvorgang ausführen, um ein Unfallereignis zu erfassen, während sie Information teilen, und ein Lernergebnis verwenden, um ein Unfallereignis zu erfassen.

7. System nach Anspruch 6, wobei jeder der Vielzahl von Agenten der zweiten Schicht Information von der Vielzahl von Agenten der dritten Schicht sammelt, die Information von loT-Vorrichtungen (400) einer Gruppe zugewiesener Teilbereiche sammeln,
die Vielzahl von Agenten der zweiten Schicht durch Zusammenarbeit miteinander einen Lernvorgang ausführen, um ein Unfallereignis vorherzusagen, und ein Lernergebnis verwenden, um das Unfallereignis vorherzusagen, und
der Agent der ersten Schicht basierend auf den durch die Vielzahl von Agenten der zweiten Schicht erhaltenen Vorhersageergebnisse eine Steuerung ausführt, um die Menge der gesammelten Information zu erhöhen oder die Arten der gesammelten Information für den Teilbereich zu erhöhen, in dem ein Unfallereignis vorhergesagt wird.

8. System nach einem der Ansprüche 1 bis 7, wobei jeder der Vielzahl von Agenten der dritten Schicht mit einem anderen Agenten der dritten Schicht zusammenarbeitet, um für eine Nachricht von einem Publisher einen Lernvorgang zum Steuern eines Topics, To, und ein Teilen der Nachricht auszuführen; und ein Lernergebnis verwendet, um mit dem anderen Agenten der dritten Schicht zusammenzuarbeiten und das Generieren des Topics, eine Bestimmung des To, ein Duplizieren der Nachricht und das Teilen der Nachricht derart zu steuern, dass die Nachricht vom Publisher einen geeigneten Subscriber erreicht.

9. System nach Anspruch 8, wobei jeder der Vielzahl von Agenten der zweiten Schicht ein durch die Vielzahl von Agenten der dritten Schicht ausgeführtes Routing anhand von Information überwacht, die von der Vielzahl von Agenten der dritten Schicht gesammelt wurde, um einen Lernvorgang zum Ausführen einer Verarbeitung zum Lösung eines Problems auszuführen, das beim Routing auftritt, und
der Agent der ersten Schicht einen Lernvorgang zum Erfassen eines Problems im Cloud-Netzwerk (300) anhand von Information ausführt, die von der Vielzahl von Agenten der zweiten Schicht gesammelt wurde.

## Revendications

1. Système comprenant :
un premier agent de couche d'une première couche, une pluralité de deuxièmes agents de couche d'une deuxième couche qui est inférieure à la première couche, et une pluralité de troisièmes agents de couche d'une troisième couche qui est inférieure à la deuxième couche, le premier agent de couche, la pluralité de deuxièmes agents de couche et la pluralité de troisièmes agents de couche étant agencés en un réseau (100), dans lequel
le premier agent de couche est agencé dans une première couche de réseau (100) d'un réseau (100) de type en couches, la pluralité de deuxièmes agents de couches sont agencés dans une deuxième couche de réseau (100) qui est inférieure à la première couche de réseau (100) du réseau (100) de type en couches, et la pluralité de troisièmes agents de couche sont agencés dans une troisième couche de réseau (100) qui est inférieure à la deuxième couche de réseau (100) du réseau (100) de type en couches,
le réseau (100) de type en couches est un réseau de cloud (300), la première couche de réseau (100) est configurée par un dispositif informatique de cloud (310), la deuxième couche de réseau (100) est configurée par une pluralité de dispositifs informatiques géodistribués (320), et la troisième couche de réseau (100) est configurée par une pluralité de dispositifs informatiques en périphérie (330),
chacun parmi la pluralité de troisièmes agents de couche recueille des informations depuis une pluralité de dispositifs d'IoT (400) par le biais d'une communication mobile, utilise les informations recueillies pour exécuter un apprentissage en coopération avec un autre troisième agent de couche, utilise un résultat d'apprentissage pour générer des informations récapitulatives obtenues en récapitulant une pluralité d'éléments d'informations recueillies, et transmettre, à au moins n'importe lequel parmi la pluralité de deuxièmes agents de couche, les informations récapitulatives générées,
chacun parmi la pluralité de deuxièmes agents de couche utilise les informations recueillies depuis la pluralité de troisièmes agents de couche pour exécuter un apprentissage en coopération avec un autre deuxième agent de couche, utilise un résultat d'apprentissage pour générer des informations récapitulatives obtenues en récapitulant une pluralité d'éléments d'informations recueillies, et transmettre, au premier agent de couche, les informations récapitulatives générées,
le premier agent de couche exécute un apprentissage en utilisant les informations reçues depuis la pluralité de deuxièmes agents de couche,
le deuxième agent de couche exécute un traitement avec une performance en temps réel faible par comparaison avec celle du troisième agent de couche, et
le premier agent de couche exécute un traitement avec une performance en temps réel faible par comparaison avec celle du deuxième agent de couche, dans lequel
chacun parmi la pluralité de troisièmes agents de couche inclut
une troisième unité de recueil d'informations (233) qui recueille des informations, une troisième unité d'exécution d'apprentissage (234) qui utilise des informations recueillies par la troisième unité de recueil d'informations (233) pour exécuter un apprentissage en coopération avec une pluralité d'autres troisièmes agents de couche, et
une troisième unité de transmission d'informations (236) qui transmet, à au moins n'importe lequel parmi la pluralité de deuxièmes agents de couche, les informations récapitulatives générées en utilisant un résultat d'apprentissage obtenu par la troisième unité d'exécution d'apprentissage (234), et
chacun parmi la pluralité de deuxièmes agents de couche inclut
une deuxième unité de recueil d'informations (233) qui recueille des informations depuis la pluralité de troisièmes agents de couche,
une deuxième unité d'exécution d'apprentissage (234) qui utilise les informations recueillies par la deuxième unité de recueil d'informations (233) pour exécuter un apprentissage en coopération avec une pluralité d'autres deuxièmes agents de couche, et
une deuxième unité de transmission d'informations (236) qui transmet, au premier agent de couche, les informations récapitulatives générées en utilisant un résultat d'apprentissage obtenu par la deuxième unité d'exécution d'apprentissage (234), et
le premier agent de couche inclut
une première unité de recueil d'informations (233) qui recueille des informations depuis la pluralité de deuxièmes agents de couche, et
une première unité d'exécution d'apprentissage (234) qui utilise les informations recueillies par la première unité de recueil d'informations (233) pour exécuter un apprentissage.

2. Système selon la revendication 1, dans lequel
par le biais d'un contenu en informations recueillies depuis la pluralité de deuxièmes agents de couche, ou d'un état de recueil des informations, le premier agent de couche spécifie un emplacement où une charge de communication est élevée dans le réseau de cloud (300) ; et ajuste une quantité et un chemin de propagation d'informations qui doivent être transmises par la pluralité de troisièmes agents de couche et la pluralité de deuxièmes agents de couche, pour réduire la charge de communication.

3. Système selon la revendication 1 ou 2, dans lequel chacun parmi la pluralité de troisièmes agents de couche utilise des informations transmises par le dispositif d'IoT (400) qui acquiert, par le biais d'un capteur, des informations incluant au moins n'importe laquelle parmi des données d'image, des données sonores, des données infrarouges, des données d'emplacement, des données de détection d'objet, des données de distance, des données météorologiques, des données de température ou des données d'humidité ; et exécute un apprentissage en coopération avec la pluralité d'autres troisièmes agents de couche, et transmet, à au moins n'importe lequel parmi la pluralité de deuxièmes agents de couche, des informations générées en utilisant le résultat d'apprentissage.

4. Système selon l'une quelconque des revendications 1 à 3, dans lequel chacun parmi la pluralité de troisièmes agents de couche recueille des informations, pour chacun d'une pluralité de zones divisées, depuis le dispositif d'IoT (400) monté sur un véhicule situé au sein de la zone, le dispositif d'IoT (400) monté sur un feu de signalisation, et le dispositif d'IoT (400) installé sur une route ; et partage des informations avec l'autre troisième agent de couche, pour exécuter la détection d'un danger tel que dans un cas où une distance entre des véhicules devient plus courte qu'une valeur de seuil, et une collision entre un véhicule et un être humain.

5. Système selon la revendication 4, dans lequel en se basant sur les informations recueillies depuis la pluralité de troisièmes agents de couche dans un passé, chacun parmi la pluralité de deuxièmes agents de couche détermine des informations qui ont une priorité élevée pour le recueil, en exécutant un apprentissage en coopération avec l'autre deuxième agent de couche ; et publie des instructions pour la pluralité de troisièmes agents de couche de telle sorte que les informations qui ont une priorité élevée peuvent être recueillies.

6. Système selon l'une quelconque des revendications 1 à 5, dans lequel depuis un dispositif d'IoT (400) qui est agencé dans une sous-zone de responsabilité, chacun parmi la pluralité de troisièmes agents de couche recueille des données d'image et des données de détection d'objet, dans lequel la sous-zone est parmi une pluralité de sous-zones obtenues en divisant une zone qui est une cible pour gérer un état d'une occurrence d'un accident, et
la pluralité de troisièmes agents de couche qui sont responsables de la pluralité de sous-zones qui sont géographiquement adjacentes, exécutent un apprentissage pour détecter l'occurrence d'un accident tout en partageant des informations, et utilisent un résultat d'apprentissage pour détecter l'occurrence d'un accident.

7. Système selon la revendication 6, dans lequel chacun parmi la pluralité de deuxièmes agents de couche recueille des informations depuis la pluralité du troisième agent de couche qui recueille des informations depuis les dispositifs d'IoT (400) d'un groupe des sous-zones qui sont attribuées,
la pluralité de deuxièmes agents de couche exécutent un apprentissage pour prévoir l'occurrence d'un accident, en coopérant les uns avec les autres, et utilisent un résultat d'apprentissage pour prévoir l'occurrence d'un accident, et
par le biais des résultats de prévision obtenus par la pluralité de deuxièmes agents de couche, le premier agent de couche réalise une commande pour augmenter une quantité d'informations qui est recueillie, ou augmente les types d'informations qui sont recueillies, pour la sous-zone où il est prévu une occurrence d'accident.

8. Système selon l'une quelconque des revendications 1 à 7, dans lequel chacun parmi la pluralité de troisièmes agents de couche coopère avec l'autre troisième agent de couche pour exécuter, pour un message depuis un éditeur, un apprentissage pour commander l'Objet, le Destinataire et le fractionnement ; et utilise un résultat d'apprentissage pour coopérer avec l'autre troisième agent de couche, et commander une génération de l'Objet, une détermination du Destinataire, une duplication du message, et le fractionnement du message de telle sorte que le message de l'éditeur atteigne un abonné approprié.

9. Système selon la revendication 8, dans lequel chacun parmi la pluralité de deuxièmes agents de couche surveille l'acheminement réalisé par la pluralité de troisièmes agents de couche, par le biais d'informations recueillies auprès de la pluralité de troisièmes agents de couche, pour exécuter un apprentissage afin d'exécuter un traitement pour résoudre un problème qui se produit dans l'acheminement, et
le premier agent de couche exécute un apprentissage pour détecter un problème dans le réseau de cloud (300), par le biais d'informations recueillies depuis la pluralité de deuxièmes agents de couche.
